# FASCICULE DE BREVET EUROPEEN

(11) **EP 2 964 452 B1**
(45) Date de publication et mention de la délivrance du brevet: **19.04.2017**
(21) Numéro de dépôt: 14715039.5
(22) Date de dépôt: 07.03.2014
(51) Int. Cl.: B29C 70/54, B29C 70/74, B32B 5/18, B32B 17/12, B32B 3/08, B32B 3/26, B32B 27/12, B29L 31/00, B29K 23/00, B29K 25/00, B29K 33/04, B29K 55/02, B29K 81/00, B29L 9/00

(54) **PROCÉDÉ DE FABRICATION D'UN MATÉRIAU COMPOSITE MULTICOUCHE, MATÉRIAU COMPOSITE MULTICOUCHE OBTENU PAR LE PROCÉDÉ ET PIÈCES OU STRUCTURES MÉCANIQUES RÉALISÉES AVEC LEDIT MATÉRIAU**
VERFAHREN ZUR HERSTELLUNG EINES MEHRSCHICHTIGEN VERBUNDMATERIALS, IN DIESEM VERFAHREN HERGESTELLTES MEHRSCHICHTIGES VERBUNDMATERIAL UND MIT DEM BESAGTEN MATERIAL HERGESTELLTE MECHANISCHE TEILE ODER STRUKTUREN
METHOD FOR PRODUCING A MULTILAYER COMPOSITE MATERIAL, MULTILAYER COMPOSITE MATERIAL OBTAINED BY THE METHOD AND MECHANICAL PARTS OR STRUCTURES PRODUCED WITH SAID MATERIAL

(30) Priorité: 07.03.2013 FR 1352057
(43) Date de publication de la demande: 13.01.2016
(73) Titulaire: Arkema France, 92700 Colombes (FR)
(72) Inventeur: GERARD, Pierre, F-64230 Denguin (FR)
(86) Numéro de dépôt international: PCT/FR2014/050518
(87) Numéro de publication internationale: WO 2014/135810

(56) Documents cités:
- US-A- 2 322 582
- US-A1- 2005 051 255

## Description

### [Domaine de l'invention]

La présente invention concerne un procédé de fabrication d'un matériau composite multicouche comprenant une couche de surface comportant un polymère thermoplastique A ; une couche substrat comportant un matériau composite polymérique à base d'une matrice polymérique (meth)acrylique thermoplastique et un matériau fibreux de renfort, et qui permet la formation d'une ou plusieurs fenêtres comportant un matériau thermoplastique susceptible d'être transparent.

Le procédé est particulièrement adapté à la réalisation de pièces ou éléments de structures mécaniques bi ou tridimensionnelles ou d'articles décoratifs nécessitant une ou plusieurs fenêtres comportant un matériau thermoplastique, susceptibles d'être transparent.

L'invention a également pour objet un matériau composite multicouche comprenant une ou plusieurs fenêtres en matériau thermoplastique susceptible d'être transparent, obtenu par le procédé et des pièces ou éléments de structures mécaniques bi ou tridimensionnelles ou d'articles décoratifs réalisés avec ledit matériau

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif lors de l'utilisation de matériaux composites est d'obtenir à partir du matériau composite des performances qui ne sont pas disponibles à partir de ses constituants séparés s'ils sont utilisés seuls. Par conséquent, des matériaux composites sont largement utilisés dans plusieurs secteurs industriels tels que par exemple la construction, l'automobile, l'aérospatial, les transports, les loisirs, l'électronique et le sport, notamment en raison de leurs meilleures performances mécaniques (résistance à la traction supérieure, module de traction supérieur, ténacité à la rupture supérieure) en comparaison des matériaux homogènes et de leur faible densité.

La classe la plus importante au regard du volume à l'échelle industrielle commerciale est celle des composites à matrices organiques, dans lesquels le matériau de matrice est généralement un polymère. La matrice ou phase continue principale d'un matériau composite polymère est soit un polymère thermoplastique, soit un polymère thermodurcissable.

Les polymères thermodurcissables consistent en des structures tridimensionnelles réticulées. La réticulation est obtenue par cuisson de groupes réactifs dans ledit prépolymère. La cuisson peut par exemple être obtenue par chauffage des chaînes polymères afin de réticuler et de durcir le matériau de manière permanente.

Afin de préparer le matériau composite polymère, le prépolymère est mélangé avec l'autre composant tel que des billes ou fibres de verre ou l'autre composant est mouillé ou imprégné et cuit ultérieurement. Des exemples de prépolymère ou de matériau de matrice pour polymères thermodurcissables sont les polyesters insaturés, les esters de vinyle, les matériaux époxy ou phénoliques.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués, comprenant ledit matériau composite thermodurcissable, sont brûlés dans une cimenterie ou jetés dans une décharge.

Pour permettre le thermoformage et le recyclage on préfère utiliser les polymères thermoplastiques.

Les polymères thermoplastiques sont des polymères linéaires ou ramifiés qui ne sont pas réticulés. Les polymères thermoplastiques sont chauffés afin de mélanger les constituants nécessaires pour la fabrication du matériau composite et sont refroidis pour la forme finale figée. Le problème de ces polymères thermoplastiques fondus, est leur viscosité très importante.

Afin de préparer un matériau composite polymère à base de polymère thermoplastique, une résine polymère thermoplastique à l'état fondu, communément appelée « sirop », est utilisée pour imprégner le matériau de renfort, par exemple un substrat fibreux. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux et à éviter l'apparition de défauts dans le matériau composite final qui engendrent, entre autre, une perte de résistance mécanique du matériau composite final. Un sirop répondant à ce problème a été mis au point par la Demanderesse et est décrit dans les demandes de brevet FR N° FR1159553, ou son extension PCT WO2013/056845 et dans la demande de brevet N° FR1256929 ou son extension PCT WO2014/013028.

Il s'avère en pratique que la surface de pièces ou éléments de structures mécaniques bi ou tridimensionnelles fabriquées à partir de matériaux composites à base de fibre est ni esthétique ni décorative. En effet, la structure des fibres ou le substrat fibreux est visible à la surface. La surface n'est pas plane, ou bien la surface des dites pièces ou éléments de structure mécanique est inhomogène dans le sens où la surface présente une rugosité.

Dans le but d'obtenir une meilleure qualité de finition pour la surface visible du matériau composite à base de fibres de renfort, une couche de surface supplémentaire est appliquée. Ceci peut être réalisé au moyen d'un revêtement de surface « gel coat » ou d'une couche de peinture.

Le gel coat est habituellement, réalisé chimiquement par une résine époxy ou un polyester insaturé, traité pour former un polymère réticulé qui adhère au matériau composite.

Du fait de la réticulation de couche de surface, le matériau multicouche comprenant un composite thermoplastique a perdu les propriétés des polymères thermoplastiques et ne peut plus être thermoformé ni recyclé.

Le Déposant a résolu ce problème de façon surprenante au moyen d'un matériau composite multicouche et d'un procédé de fabrication décrit dans sa demande de brevet N° PCT/EP2013/050660 déposée le 15 Janvier 2013 non encore publiée.

Le matériau composite multicouche pour la réalisation de pièces mécaniques ou d'éléments structurés ou d'articles, décrit dans cette demande de brevet comprend :
- a) une couche de surface comprenant un polymère thermoplastique A,
- b) une couche de substrat comprenant un matériau composite polymérique, principalement caractérisé en ce que le matériau composite polymérique comprend une matrice (meth)acrylique polymérique thermoplastique et un matériau fibreux de renfort dans lequel le matériau fibreux comprend soit des fibres ayant un facteur de forme au moins égal à 1000 ou bien ledit matériau fibreux a une structure macroscopique à deux dimensions.

### [PROBLEME TECHNIQUE]

Cependant, le Déposant est confronté à un autre problème technique à savoir la réalisation de fenêtres transparentes ou non dans des matériaux composites multicouche. Ce besoin est particulièrement ressenti pour la réalisation de pièces mécaniques ou d'éléments structurés ou d'articles nécessitant une zone de visibilité en ce sens qu'elle permet de voir au travers, comme par exemple un pare-brise d'automobile, un écran de visibilité dans une coque d'appareil (comme par exemple des bornes de recharge, des bornes d'arrêt d'urgence, ...), une coque de bateau incluant les hublots, un toit vitré de voiture ou encore pour des objets décoratifs.

Le but de la présente invention est de résoudre ce problème technique.

L'invention vise à proposer un procédé de réalisation de matériau composite multicouche qui peut être mis en oeuvre à faible coût, qui inclut la réalisation d'une ou plusieurs fenêtres en matériau transparent ou non et qui permet une fabrication à l'échelle industrielle, pour produire les pièces structurales dans un matériau composite multicouche thermoplastique comprenant au moins une fenêtre transparente ou non. Par ailleurs, le procédé doit être simple et rapide à mettre en oeuvre en utilisant des composants disponibles dans le commerce. La fabrication de pièces doit également être reproductible et rapide, ce qui signifie des temps de cycle courts.

Un autre objectif de la présente invention est de pouvoir fabriquer une structure multicouche composite permettant de réaliser des pièces comprenant un matériau composite thermoplastique avec une ou des fenêtres transparentes ou non, ayant un aspect de surface satisfaisant cachant l'aspect fibreux de la couche de surface tout en restant un matériau composite thermoplastique.

Un autre objet de la présente invention est de pouvoir fabriquer des pièces structurelles multicouche comprenant un matériau composite thermoplastique avec une ou des fenêtres transparentes ou non, dans lequel l'adhésion entre les différentes couches respectives ne nécessite pas des matériaux adhésifs additionnels.

Un autre but de la présente invention est de pouvoir fabriquer des pièces structurelles multicouches comprenant un matériau composite thermoplastique avec des fenêtres transparentes ou non, qui peut être transformé et mis en forme grâce à la flexibilité de chaque couche.

Un autre objectif de l'invention est de pouvoir recycler les pièces structurelles comportant un matériau multicouche qui sont usées ou qui ne répondent pas aux critères qualité de la fabrication.

### [ART ANTERIEUR]

Le document WO2012/088569 décrit un procédé production permettant de tester la qualité de surface des composites.

Le document W2012/136235 décrit un procédé de production d'un matériau composite multi fibre de carrosserie avec un revêtement de surface classe A. La surface est obtenue par l'application d'un spray par système de revêtement d'un moule et traitement. Le revêtement n'est pas thermoplastique et par conséquent, il ne peut pas être thermoformé ou recyclé.

Le document WO2007/021797 décrit une composition de revêtement en poudre pour le revêtement de surface de composites thermoplastiques. Le revêtement en poudre comporte un copolymère d'acétate de vinyle et un liant thermoplastique ou thermodurcissable.

Le document US2005/051255 décrit un procédé de fabrication d'un matériau composite multicouche pour la fabrication d'un panneau fin à fenêtres conformément au préambule de la revendication 1 et un matériau composite multicouche conformément au préambule de la revendication 15. Les fenêtres sont faites à l'aide de cadres métalliques dans le panneau.

Aucun document de la technique ne décrit de pièces mécaniques ou d'éléments structurés ou d'articles comprenant un matériau composite multicouche thermoplastique comprenant une ou des fenêtres permettant de résoudre les problèmes techniques énoncés ci-dessus. Aucun document ne décrit de procédé de fabrication d'un tel matériau.

### [BREVE DESCRIPTION DE L'INVENTION]

De manière surprenante, le Déposant a découvert qu'un procédé de fabrication d'un matériau composite multicouche pour la réalisation de pièces mécaniques ou d'éléments structurés ou d'articles, comprenant les étapes suivantes :
- a) découper au moins une fenêtre dans une ou plusieurs couches en polymère thermoplastique, l'une des couches étant une couche de surface (1) comportant un polymère thermoplastique A, et au moins une fenêtre dans un matériau fibreux de renfort comprenant des fibres longues, lesdites fenêtres étant destinées à coïncider,
- b) insérer ou non une plaque thermoplastique dans la ou lesdites fenêtres,
- c) imprégner le matériau fibreux par un sirop liquide (meth)acrylique de sorte que le sirop remplisse aussi ladite au moins une fenêtre, en l'absence de plaque thermoplastique,
- d) polymériser le sirop liquide (meth)acrylique imprégnant le matériau fibreux et présent, en l'absence de plaque thermoplastique, dans la ou les fenêtres,
permet d'obtenir un matériau multicouche qui résout les problèmes techniques énoncés ci-dessus.

Ainsi, les fenêtres sont réalisées par le même procédé de fabrication du matériau composite multicouche. La réalisation d'une ou plusieurs fenêtres est incluse dans les étapes de fabrication du matériau composite multicouche. Selon le procédé, le matériau présent dans les fenêtres est obtenu par l'insertion d'une plaque thermoplastique dans lesdites fenêtres et/ou avec les étapes d'imprégnation et de polymérisation permettant la fabrication du matériau composite multicouche, ce qui représente un gain de temps et une simplification pour la fabrication de pièces à l'échelle industrielle. L'insertion d'une plaque thermoplastique transparente ou non transparente, dans la ou les fenêtres dans le procédé de fabrication du matériau composite multicouche permet grâce aux étapes d'imprégnation et de polymérisation de solidariser /sceller la ou les plaques aux couches constituant le matériau composite et d'obtenir un matériau avec une ou plusieurs fenêtres transparentes ou non.

Le procédé ne nécessite pas d'opération de collage ou de soudure d'une pièce transparente rapportée.

Le Déposant a également trouvé qu'un matériau composite multicouche obtenu selon le procédé décrit et comprenant :
- a) une ou plusieurs couches en polymère thermoplastique dont l'une est une couche de surface (1) comprenant un polymère thermoplastique A,
- b) une couche substrat (2) comprenant un matériau composite polymérique comportant une matrice polymérique thermoplastique (meth)acrylique et un matériau fibreux de renfort, ledit matériau fibreux étant constitué de fibres longues et,
- c) au moins une fenêtre dans les couches en polymère thermoplastique et substrat, ladite fenêtre étant remplie par un matériau thermoplastique constitué de la matrice polymérique (meth)acrylique thermoplastique ou d'une plaque thermoplastique,
permet de réaliser des pièces mécaniques ou des éléments structurés ou des articles avec fenêtres remplies d'un matériau thermoplastique.

Selon un autre aspect de l'invention, le matériau composite multicouche comporte une couche intermédiaire additionnelle entre la couche de surface et la couche substrat, ladite couche intermédiaire comprenant un polymère thermoplastique B comprenant une fenêtre également remplie par le matériau thermoplastique ou la plaque thermoplastique.

### [DESCRIPTION DETAILLEE]

Selon un premier aspect, la présente invention concerne un procédé de fabrication d'un matériau composite multicouche pour la réalisation de pièces mécaniques ou d'éléments structurés ou d'articles, comprenant les étapes suivantes :
- a) découper au moins une fenêtre dans une ou plusieurs couches en polymère thermoplastique, l'une des couches étant une couche de surface (1) comportant un polymère thermoplastique A, et au moins une fenêtre dans un matériau fibreux de renfort (2) constitué de fibres longues, lesdites fenêtres étant destinées à coïncider,
- b) Insérer ou non une plaque thermoplastique dans la ou lesdites fenêtres,
- c) imprégner le matériau fibreux par un sirop liquide (meth)acrylique de sorte que le sirop remplisse aussi ladite au moins une fenêtre, en l'absence de plaque thermoplastique
- d) polymériser le sirop liquide (meth)acrylique imprégnant le matériau fibreux et présent en l'absence de plaque thermoplastique, dans la ou les fenêtres.

Selon un premier mode de réalisation, le procédé comprend:
- le thermoformage de la couche de surface comportant un polymère thermoplastique A,
- la pose du matériau fibreux de renfort sur une face de la couche de surface avant l'étape c) d'imprégnation dudit matériau fibreux.

La couche de surface comportant le polymère thermoplastique A, pour le thermoformage, est sous forme d'un film ou plaque.

Ledit film ou plaque a une épaisseur moins que 10mm, de préférence mois que 6mm.

Selon un deuxième mode de réalisation le procédé comprend:
- le laminage de la couche de surface (1) sur au moins une face, l'autre face étant en contact avec une face du matériau fibreux de renfort (2), cette étape de laminage étant opérée après l'étape de polymérisation d).

Avantageusement, la plaque insérée dans la ou les fenêtres, est transparente et permet une transmission de la lumière supérieure à 65%, préférablement supérieure à 75% et plus préférablement supérieure à 85%.

Le découpage de l'étape a) est fait en une seule étape après superposition de la couche de surface et du matériau fibreux ou séparément pour le matériau fibreux et pour la couche de surface.

Avantageusement, le découpage de l'étape a) est réalisé au moyen d'un outil de découpe comme des ciseaux, une presse à découper, emporte pièce, laser.

Avantageusement, l'imprégnation du matériau fibreux de l'étape c) est réalisée dans un moule fermé.

L'étape c) d'imprégnation du matériau fibreux de renfort par le sirop liquide (meth)acrylique et l'étape d) de polymérisation du sirop liquide (meth)acrylique, sont réalisées dans le même moule fermé.

Le terme « couche de surface » tel qu'il est utilisé, désigne la couche supérieure ou extérieure du matériau composite multicouche exposée à l'environnement.

Le terme « couche substrat » tel qu'il est utilisé désigne la couche comportant le matériau composite polymérique thermoplastique du composite multicouche.

Le terme « couche intermédiaire » tel qu'utilisé signifie que cette couche est entre la couche de surface et la couche substrat du matériau composite multicouche.

Le terme « matériau fibreux » tel qu'utilisé se rapporte à des tissus, voiles, des feutres ou des non-tissés qui peuvent être sous la forme de bandes, de nappes, de tresses, de mèches ou de pièces.

Le terme « fenêtre » tel qu'il est utilisé se rapporte à une découpe pratiquée dans les couches formant le matériau composite et destinée à être remplie par un matériau thermoplastique susceptible d'être transparent.

Le terme « fenêtre transparente » tel qu'il est utilisé se rapporte à une fenêtre remplie par un matériau thermoplastique transparent.

Le terme « plaque thermoplastique » tel qu'il est utilisé signifie une plaque en polymère thermoplastique.

Le terme « transparent » tel qu'il est utilisé, signifie laissant passer la lumière du spectre visible avec une transmission de la lumière supérieure à 65%, selon les mesures de la transmission lumineuse définies par la norme ASTM D 1003.

Le terme « (méth)acrylique » tel qu'utilisé se rapporte à tout type de monomères acryliques et méthacryliques.

Le terme « matrice polymérique thermoplastique (meth)acrylique » tel qu'utilisé se rapporte à matrice polymérique thermoplastique (meth)acrylique essentiellement des polymères comportant des monomères à hauteur de 50% en poids ou plus de la matrice polymérique thermoplastique (meth)acrylique.

Le terme « PMMA » tel qu'utilisé se rapporte aux homo- et copolymères de méthacrylate de méthyle (MMA), le rapport de MMA dans le PMMA étant d'au moins 70 % en poids pour le copolymère de MMA.

Le terme « monomère » tel qu'utilisé se rapporte à une molécule qui peut subir une polymérisation.

Le terme « polymérisation » tel qu'utilisé se rapporte au procédé de transformation d'un monomère ou d'un mélange de monomères en un polymère.

Le terme « polymère thermoplastique » tel qu'utilisé se rapporte à un polymère qui se transforme en un liquide ou devient plus liquide ou moins visqueux lorsqu'il est chauffé et qui peut prendre de nouvelles formes par l'application de chaleur et de pression (thermoformage). Apres refroidissement le polymère revient dur et garde sa nouvelle forme modelée.

Le terme « polymère thermodurcissable » tel qu'utilisé se rapporte à un prépolymère à un état liquide, solide ou visqueux qui se transforme de manière irréversible en un réseau polymère insoluble et infusible par cuisson.

Le terme « composite polymère » tel qu'utilisé se rapporte à un matériau multi-composant comprenant plusieurs domaines de phase différents, parmi lesquels au moins un type de domaine de phase est une phase continue et dans lequel au moins un composant est un polymère.

Concernant les pièces ou éléments de structure réalisés avec le matériau composite multicouche, il s'agit de panneaux, de couvercles, de coques ou des parties réalisés en matériau composites pour des avions, des bateaux (coques ou pont), des wagons, des parties de véhicules automobiles ou engins agricoles (carrosserie, capots, portières), des boitiers d'appareils électriques ou électroniques.

En ce qui concerne le polymère (méth) acrylique, on peut mentionner les polyméthacrylates d'alkyle ou les polyacrylates d'alkyle. Selon un mode de réalisation préféré, le polymère (méth)acrylique est le polyméthacrylate de méthyle (PMMA).

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

Le poids moléculaire moyen en poids du polymère (méth)acrylique doit être élevé, ce qui signifie supérieur à 50 000 g/mol, de préférence supérieur à 100 000 g/mol.

Le poids moléculaire moyen en poids peut être mesuré par chromatographie d'exclusion stérique (SEC en anglais) ou chromatographie sur gel perméable (GPC en anglais). Les polymères sont solubilisés à 1g/l dans du THF stabilisé au BHT. L'étalonnage est effectué grâce à des étalons de polystyrène monodisperses.

En ce qui concerne le monomère (méth)acrylique, le monomère est choisi parmi l'acide acrylique, l'acide méthacrylique, les monomères acryliques d'alkyle, les monomères méthacryliques d'alkyle et leurs mélanges.

De préférence, le monomère est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60 % en poids du monomère est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère est un mélange de méthacrylate de méthyle avec de l'acrylate d'isobornyle et/ou de l'acide acrylique.

En ce qui concerne le substrat fibreux, on peut mentionner les tissus, les voiles, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres longues linéaires. Les fibres peuvent être discontinues ou continues. Les fibres peuvent être agencées de manière aléatoire ou sous la forme d'un filament continu en parallèle les unes aux autres. Une fibre est définie par son facteur de forme, qui est le rapport entre la longueur et le diamètre de la fibre. Les fibres utilisées dans la présente invention sont des fibres longues ou des fibres continues. Les fibres ont un facteur de forme d'au moins 1 000, de préférence d'au moins 1 500, de manière davantage préférée d'au moins 2 000, avantageusement d'au moins 3 000, plus avantageusement d'au moins 5 000, encore plus avantageusement d'au moins 6000, toujours plus avantageusement d'au moins 7500 et le plus avantageusement d'au moins 10 000.

La forme bidimensionnelle correspond à des mats fibreux ou des renforts non tissés ou tissés ou des faisceaux de fibres, qui peuvent également être tressés. Même si la forme bidimensionnelle a une certaine épaisseur et par conséquent a en principe une troisieme dimension, elle est considérée comme bidimensionnelle selon la présente invention.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges.

De préférence, le substrat fibreux est choisi parmi les fibres minérales.

Les fibres du substrat fibreux ont un diametre entre 0.005µm et 100µm, de préférence entre 1µm et 50µm, de manière davantage préférée entre 5µm et 30µm et avantageusement entre 10µm et 25µm.

De préférence les fibres du substrat fibreux de la présente invention sont choisies parmi les fibres continues (ce qui signifie que le facteur de forme n'est pas forcement applicable comme pour des fibres longues) pour la forme monodimensionnelle, ou pour des fibres longues ou continues pour la forme bidimensionnelle ou tridimensionnelle du substrat fibreux.

En ce qui concerne le sirop (méth)acrylique liquide selon l'invention qui imprègne le substrat fibreux, il comprend un monomère (méth)acrylique ou un mélange de monomères (méth)acryliques, un polymère (méth)acrylique et au moins un initiateur ou un système initiant le démarrage de la polymérisation du monomère (méth)acrylique. La viscosité est accrue en utilisant un monomère (méth)acrylique ou un mélange d'un monomère (méth)acrylique avec un polymère (méth)acrylique dissout ou un polymère (méth)acrylique. Cette solution est communément appelée « sirop » ou « prépolymère »

Le sirop (méth)acrylique liquide doit avoir une viscosité maitrisée pour le procédé d'imprégnation de la présente invention, notamment pour le mouillage et l'imprégnation corrects et complets du substrat fibreux. La viscosité dynamique du sirop (méth)acrylique liquide est dans une plage allant de 10 mPa*s à 10 000 mPa*s, de préférence de 50 mPa*s à 5 000 mPa*s et avantageusement de 100 mPa*s à 1 000 mPa*s. La viscosité du sirop peut facilement être mesurée avec un rhéomètre ou un viscosimètre. La viscosité dynamique est mesurée à 25°C. Le sirop (méth)acrylique liquide a un comportement newtonien, ce qui signifie qu'il n'y a pas de dilution sous cisaillement, de sorte que la viscosité dynamique est indépendante du cisaillement dans un rhéomètre ou de la vitesse du mobile dans un viscosimètre.

Avantageusement, le sirop (méth)acrylique liquide ne comprend pas d'additifs solvant volontairement.

Le polymère (méth)acrylique liquide est complètement soluble dans le monomère (méth)acrylique.

Ce polymère (méth)acrylique est du PMMA, c'est-à-dire de l'homo- ou un copolymère de méthyle méthacrylate (MMA) ou leur mélange comme précédemment défini.

Le monomère (méth) acrylique est le même que défini précédemment.

le monomère (meth)acrylique ou les monomères (meth)acrylique est présent à hauteur de 40% en poids dans le sirop liquide (meth)acrylique, de préférence 50% en poids, avantageusement 60% en poids et plus avantageusement 65% en poids de la totalité du sirop (meth)acrylique.

le polymère ou les polymères du sirop liquide (meth)acrylique est présent à hauteur d'au moins 10% en poids et plus avantageusement d'au moins 20% en poids de la totalité du sirop (meth)acrylique.

Le polymère ou les polymères du sirop liquide (meth)acrylique sont présents au plus à hauteur de 60% en poids, de préférence au plus 50%, avantageusement au plus 40% et plus avantageusement au plus 35% en poids de la totalité du sirop liquide (meth) acrylique.

Le procédé de fabrication de pièces composites est choisi parmi le moulage par transfert de résine ou l'infusion.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du sirop (méth)acrylique liquide. Le moulage par transfert de résine comprend de nombreuses variétés qui diffèrent au niveau de la mécanique d'introduction du sirop (méth)acrylique liquide dans le substrat fibreux dans la cavité de moulage. Ces variations vont de l'infusion sous vide au moulage par transfert de résine sous vide (VARTM). Ce procédé peut être réalisé à température ambiante ou élevée.

Avec le procédé d'infusion, le sirop (méth)acrylique liquide doit avoir la viscosité adaptée pour ce procédé de préparation du matériau composite polymère. Le sirop (méth)acrylique liquide est aspiré dans le substrat fibreux présent dans un moule spécial par application d'un léger vide. Le substrat fibreux est infusé et complètement imprégné par le sirop (méth)acrylique liquide.

Un autre objet de l'invention porte sur un matériau composite multicouche comprenant :
- a) une ou plusieurs couches en polymère thermoplastique dont l'une est une couche de surface (1) comprenant un polymère thermoplastique A,
- b) une couche substrat (2) comprenant un matériau composite polymérique comportant une matrice polymérique thermoplastique (meth)acrylique et un matériau fibreux de renfort, ledit matériau fibreux étant constitué de fibres longues et,
- c) au moins une fenêtre dans les couches en polymère thermoplastique et substrat, ladite fenêtre étant en matériau thermoplastique constitué de la matrice polymérique (meth)acrylique thermoplastique ou d'une plaque en matériau thermoplastique.

Avantageusement, la fenêtre ou chaque fenêtre est remplie par une plaque thermoplastique transparente en PET (polyethylène terephtalate), ou en polycarbonate, polystyrène, ou de préférence en PMMA (polyméthylméthacrylate).

Selon un autre objet, le matériau composite comporte une couche intermédiaire additionnelle (3) entre la couche de surface (1) et la couche substrat (2), ladite couche intermédiaire comprenant un polymère thermoplastique B.

Le polymère thermoplastique A de la couche de surface peut être choisi parmi les polymères de la liste suivante:
- les polymères (meth)acryliques,
- les polyesters saturés (PET, PBT, PLA etc.),
- le copolymère acrylonitrile butadiène styrène (ABS),
- le copolymère styrène-acrylonitrile (SAN),
- le copolymère Acrylonitrile-styrene-acrylate (ASA),
- le polystyrène (cristallin ou à impact élevé),
- le polypropylène (PP),
- Le polyéthylène (PE),
- le polycarbonate (PC),
- Le Poly(oxyde de phénylène) (PPO),
- Le polysulfone (PSU),
- Le Polychlorure de vinyle (PVC),
- Le Polyfluorure de vinylidène (PVDF),
- Le PVC chloré (PVCC),
- Le polyurétane (PU),

La couche de surface peut aussi comporter des mélanges de deux ou plus polymères de la liste de polymère thermoplastiques ci-dessus.

Le polymère thermoplastique A peut comporter des charges ou des additifs. Comme additifs on peut citer des additifs organiques comme modifiants choc ou des copolymères à blocs, des stabilisateurs thermiques, des éléments ignifugeant, et leurs mélanges.

De préférence le polymère thermoplastique A de la couche de surface est choisi parmi les polymères (meth)acryliques, le copolymère acrylonitrile-styrene-acrylate (ASA), le polyfluorure de vinylidène (PVDF, le polycarbonate (PC) ou leurs mélanges.

Avantageusement, le polymère thermoplastique A est choisi parmi les polymères (meth)acryliques et de préférence du PMMA.

Le polymère thermoplastique A de la couche de surface peut se présenter sous la forme d'un film, d'une plaque, d'une feuille.

Le polymère thermoplastique B de la couche intermédiaire peut être choisi parmi les polymères de la liste suivante:
- les polymères (meth)acryliques,
- les polyesters saturés (PET, PBT, PLA etc.),
- le copolymère acrylonitrile butadiène styrène (ABS),
- le copolymère styrène-acrylonitrile (SAN),
- le copolymère Acrylonitrile-styrene-acrylate (ASA),
- le polystyrène (cristallin ou à impact élevé),
- le polypropylène (PP),
- Le polyéthylène (PE),
- le polycarbonate (PC),
- Le Poly(oxyde de phénylène) (PPO),
- Le polysulfone (PSU),
- Le Polychlorure de vinyle (PVC),
- Le Polyfluorure de vinylidène (PVDF),
- Le PVC chloré (PVCC),
- Le polyurétane (PU).

Le polymère de la couche intermédiaire peut aussi comporter des mélanges de deux ou plusieurs polymères B de la liste de polymères B ci-dessus. Par exemple, des mélanges de PET/PC, de PMMA/PLA ou des mélanges de ABS/PC.

Le polymère thermoplastique B de la couche intermédiaire peut comporter des charges ou des additifs. Comme additifs on peut citer des additifs organiques comme des modifiants chocs ou des copolymères à blocs, des stabilisateurs thermiques, des stabilisateurs UV, des éléments ignifugeants, et leurs mélanges.

De préférence le polymère thermoplastique B est choisi parmi les polymères (meth)acryliques, le copolymère acrylonitrile butadiène styrène (ABS), le copolymère acrylonitrile-styrene-acrylate (ASA), le polyfluorure de vinylidène (PVDF), le polycarbonate (PC) ou leurs mélanges.

Avantageusement, le polymère thermoplastique B de la couche intermédiaire est un ABS ou ASA.

Le polymère thermoplastique B de la couche de surface peut se présenter sous la forme d'un film, d'une plaque, d'une feuille.

La matrice (meth)acrylique thermoplastique de la couche substrat du matériau composite polymérique comprend au moins un polymère (meth)acrylique comprenant un ou plusieurs monomère (meth)acrylique. Le monomère (meth)acrylique ou les monomères représente au moins 50% en poids ou plus, de préférence 60% ou plus, avantageusement 70% en poids et encore plus avantageusement 80% en poids de la matrice (meth)acrylique thermoplastique.

De préférence le polymère ou les polymères de (meth)acrylique représentent au moins 80% en poids et avantageusement au moins 90% en poids de la matrice (meth)acrylique thermoplastique.

Dans un exemple préféré de réalisation, la matrice (meth)acrylique thermoplastique comporte un ou des polymères (meth)acryliques.

Concernant le polymère (meth)acrylique, on peut citer le poly méthacrylate alkyle ou le poly acrylate alkyle. Dans un exemple préféré, le polymère (meth)acrylique est un poly méthacrylate alkyle.

En ce qui concerne l'utilisation des pièces composites ainsi fabriquées, on peut mentionner les applications automobiles, les applications nautiques, les applications ferroviaires, le sport, les applications aéronautiques et aérospatiales, les applications photovoltaïques, les applications informatiques, les applications pour les télécommunications et les applications pour l'énergie éolienne mais aussi des objets décoratifs.

La pièce composite est notamment une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

### [Figures]

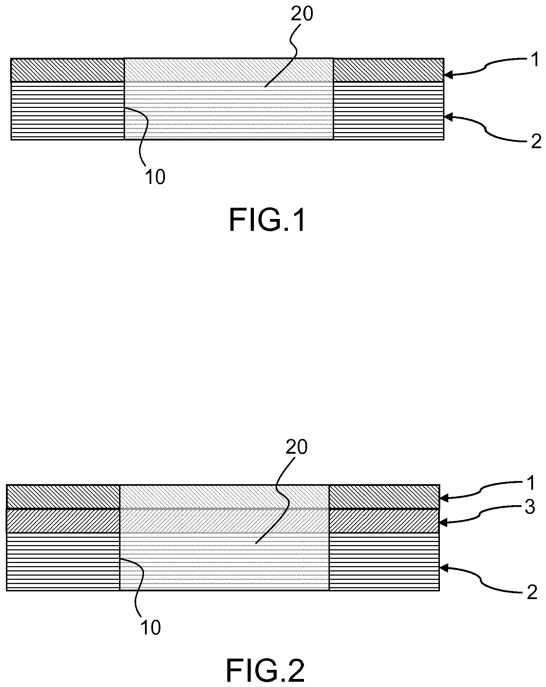

La figure 1 représente le schéma d'une coupe transversale AA d'un matériau composite multicouche avec une couche de surface (1) comportant un polymère thermoplastique A, une couche substrat comprenant un matériau composite polymérique (2) et une fenêtre 10 remplie d'un matériau thermoplastique transparent (20) dans les couches en polymère thermoplastique et substrat selon un objet de l'invention. Le matériau thermoplastique transparent est obtenu par une plaque thermoplastique transparente ou par polymérisation du sirop d'imprégnation du substrat fibreux.
La figure 2 représente le schéma d'une coupe transversale d'un matériau composite multicouche, comprenant une couche intermédiaire additionnelle (3) entre la couche de surface (1) et la couche substrat (2), ladite couche intermédiaire comprenant un polymère thermoplastique B, le matériau thermoplastique transparent (20) remplissant la fenêtre traversant les couches (1), (3) et le substrat (2).

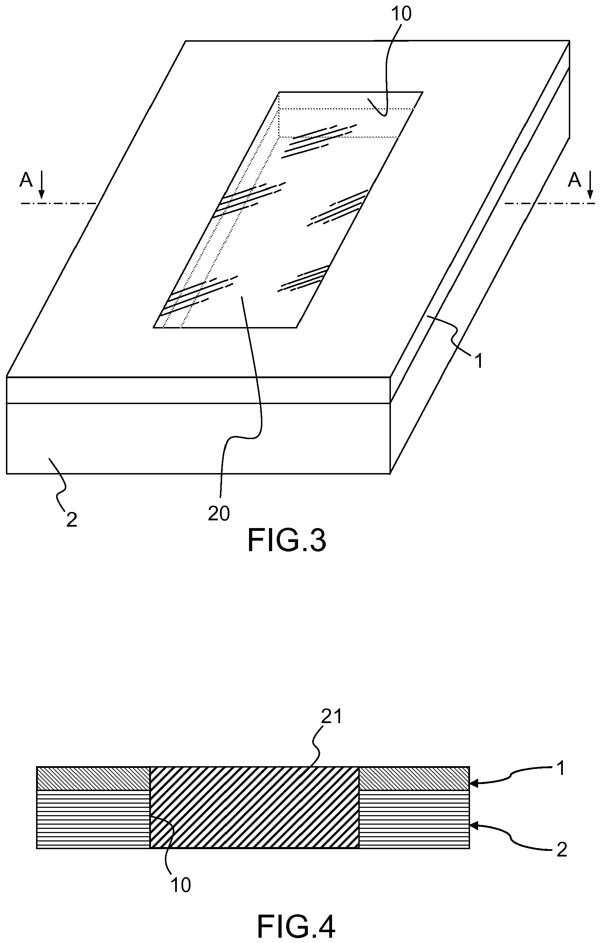

La figure 3 représente une vue en perspective du matériau vu en coupe sur la figure 1.
La figure 4, représente une vue en coupe d'un matériau composite multicouche selon l'invention, comportant une fenêtre 10 comportant une plaque thermoplastique non transparente (21).

## Revendications

1. Procédé de fabrication d'un matériau composite multicouche pour la réalisation de pièces mécaniques ou d'éléments structurés ou d'articles, **caractérisé en ce qu'**il comprend la réalisation d'une ou plusieurs fenêtres dans un matériau thermoplastique, le procédé comprenant les étapes suivantes :
- a) découper au moins une fenêtre dans une ou plusieurs couches en polymère thermoplastique, l'une des couches étant une couche de surface (1) comportant un polymère thermoplastique A, et au moins une fenêtre dans un matériau fibreux de renfort constitué de fibres longues, lesdites fenêtres étant destinées à coïncider,
- b) insérer ou non une plaque thermoplastique dans la ou lesdites fenêtres,
- c) imprégner le matériau fibreux par un sirop liquide acrylique ou méthacrylique de sorte que le sirop remplisse aussi ladite au moins une fenêtre en l'absence de plaque thermoplastique,
- d) polymériser le sirop liquide acrylique ou méthacrylique imprégnant
le matériau fibreux et présent en l'absence de plaque thermoplastique ,dans la ou les fenêtres.

2. Procédé de fabrication d'un matériau composite multicouche selon la revendication 1, **caractérisé en ce que** la plaque insérée dans la ou les fenêtres, est transparente et permet une transmission de la lumière supérieure à 65%, préférablement supérieure à 75% et plus préférablement supérieure à 85%.

3. Procédé de fabrication d'un matériau composite multicouche selon la revendication 1, **caractérisé en ce que** le matériau composite multicouche comporte une couche intermédiaire additionnelle entre la couche de surface et la couche substrat, ladite couche intermédiaire comprenant un polymère thermoplastique B comprenant une fenêtre également remplie par le matériau thermoplastique ou la plaque thermoplastique.

4. Procédé de fabrication d'un matériau composite multicouche selon les revendications 1 à 3, **caractérisé en ce qu'**il comprend en outre :
- le thermoformage de la couche de surface (1) comportant un polymère thermoplastique A,
- la pose du matériau fibreux (2) sur une face de la couche de surface (1) avant l'étape c) d'imprégnation dudit matériau fibreux.

5. Procédé de fabrication d'un matériau composite multicouche selon la revendication 1 à 3 **caractérisé en ce qu'**il comprend en outre :
- le laminage de la couche de surface (1) sur au moins une face, l'autre face étant en contact avec une face du matériau fibreux, cette étape de laminage étant opérée après l'étape de polymérisation d).

6. Procédé de fabrication d'un matériau composite multicouche selon la revendication 1, **caractérisé en ce que** le découpage de l'étape a) est fait en une seule étape après superposition de la couche de surface et du matériau fibreux ou séparément pour le matériau fibreux et pour la couche de surface.

7. Procédé de fabrication d'un matériau composite multicouche selon l'une quelconque des revendications précédentes, **caractérisé en ce que** le découpage de l'étape a) est réalisé au moyen d'un outil de découpe comme une presse à découper, emporte pièce, laser.

8. Procédé de fabrication d'un matériau composite multicouche selon l'une quelconque des revendications précédentes **caractérisé en ce que** l'imprégnation du matériau fibreux de l'étape c) est réalisée dans un moule fermé.

9. Procédé de fabrication d'un matériau composite multicouche selon l'une quelconque des revendications précédentes, **caractérisé en ce que** l'étape c) et l'étape d) sont réalisées dans le même moule fermé.

10. Procédé de fabrication d'un matériau composite multicouche selon l'une quelconque des revendications précédentes, **caractérisé en ce que** le procédé est choisi parmi le moulage par transfert de résine ou l'infusion.

11. Procédé de fabrication d'un matériau composite multicouche selon l'une quelconque des revendications précédentes, **caractérisé en ce que** la viscosité dynamique du sirop (méth)acrylique liquide est dans une plage allant de 10 mPa*s à 10 000 mPa*s, de préférence de 50 mPa*s à 5 000 mPa*s et avantageusement de 100 mPa*s à 1 000 mPa*s.

12. Procédé de fabrication d'un matériau composite multicouche selon l'une quelconque des revendications précédentes, **caractérisé en ce que** le sirop liquide acrylique ou méthacrylique comprend un monomère acrylique ou méthacrylique ou un mélange de monomères acryliques ou méthacryliques un polymère acrylique ou méthacrylique et au moins un initiateur ou un système initiateur pour démarrer la polymérisation du monomère acrylique ou méthacrylique

13. Procédé de fabrication d'un matériau composite multicouche selon l'une quelconques de revendications précédentes, **caractérisé en ce que** la matrice méthacrylique thermoplastique est choisie parmi les homo-ou copolymères de méthacrylate de méthyle ou leur mélange.

14. Procédé de fabrication d'un matériau composite multicouche selon l'une quelconques de revendications précédentes, **caractérisé en ce que** le matériau fibreux est choisi parmi les fibres végétales, les fibres de bois, les fibres animales, les fibres minérales, les fibres polymériques synthétiques, les fibres de verre, les fibres de carbone et leur mélange.

15. Matériau composite multicouche pour la réalisation de pièces mécaniques ou d'éléments structurés ou d'articles **caractérisé en ce qu'**il comprend:
- a) une ou plusieurs couches en polymère thermoplastique dont l'une est une couche de surface (1) comprenant un polymère thermoplastique A,
- b) une couche substrat (2) comprenant un matériau composite polymérique comportant une matrice polymérique thermoplastique acrylique ou méthacrylique et un matériau fibreux de renfort, ledit matériau fibreux étant constitué de fibres ayant un facteur de forme au moins égal à 1000 ou bien a une structure macroscopique à deux dimensions et,
- c) au moins une fenêtre dans les couches en polymère thermoplastique et substrat, ladite fenêtre étant en matériau thermoplastique transparent constitué de la matrice polymérique acrylique ou méthacrylique thermoplastique ou d'une plaque en matériau thermoplastique.

16. Matériau composite multicouche selon la revendication 23, **caractérisé en ce qu'**il comporte une couche intermédiaire additionnelle (3) entre la couche de surface (1) et la couche substrat (2), ladite couche intermédiaire comprenant un polymère thermoplastique B.

17. Matériau composite multicouche selon les revendications 15 et 16, **caractérisé en ce que** la plaque insérée dans la ou les fenêtres, est transparente et permet une transmission de la lumière supérieure à 65%, préférablement supérieure à 75% et plus préférablement supérieure à 85%.

18. Pièces mécaniques ou éléments de structures bi ou tridimensionnelles ou articles en matériau composite multicouche selon les revendications 15, 16 ou 17 ou obtenu selon les revendications 1 à 14 du procédé de fabrication.

19. Pièces ou articles en matériau composite multicouche selon la revendication 18 lesdites pièces ou articles étant une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse ou un objet décoratif.

## Patentansprüche

1. Verfahren zur Herstellung eines mehrschichtigen Verbundwerkstoffs zur Herstellung von mechanischen Teilen oder strukturierten Elementen oder Artikeln, **dadurch gekennzeichnet, dass** es die Herstellung von einem oder mehreren Fenstern in einem thermoplastischen Material umfasst, wobei das Verfahren die folgenden Schritte aufweist:
- a) Ausschneiden mindestens eines Fensters in einer oder mehreren Schichten aus thermoplastischem Polymer, wobei es sich bei einer der Schichten um eine Oberflächenschicht (1), die ein thermoplastisches Polymer A umfasst, handelt, und mindestens eines Fensters in einem Faserverstärkungsmaterial, das aus langen Fasern besteht, wobei die Fenster zum Zusammenfallen bestimmt sind,
- b) gegebenenfalls Einschieben einer thermoplastischen Platte in das Fenster bzw. die Fenster,
- c) Imprägnieren des Fasermaterials mit einem flüssigen Acryl- oder Methacrylsirup, so dass der Sirup auch das mindestens eine Fenster ausfüllt, in Abwesenheit der thermoplastischen Platte,
- d) Polymerisieren des das Fasermaterial imprägnierenden und in Abwesenheit der thermoplastischen Platte in dem Fenster bzw. den Fenstern vorliegenden flüssigen Acryl- oder Methacrylsirups.

2. Verfahren zur Herstellung eines mehrschichtigen Verbundwerkstoffs nach Anspruch 1, **dadurch gekennzeichnet, dass** die in das Fenster bzw. die Fenster eingeschobene Platte transparent ist und einen Lichtdurchgang von mehr als 65%, vorzugsweise mehr als 75% und weiter bevorzugt mehr als 85% erlaubt.

3. Verfahren zur Herstellung eines mehrschichtigen Verbundwerkstoffs nach Anspruch 1, **dadurch gekennzeichnet, dass** der mehrschichtige Verbundwerkstoff eine zusätzliche Zwischenschicht zwischen der Oberflächenschicht und der Substratschicht umfasst, wobei die Zwischenschicht ein thermoplastisches Polymer B umfasst, umfassend ein Fenster, das ebenfalls mit dem thermoplastischen Material oder der thermoplastischen Platte gefüllt ist.

4. Verfahren zur Herstellung eines mehrschichtigen Verbundwerkstoffs nach den Ansprüchen 1 bis 3, **dadurch gekennzeichnet, dass** es außerdem Folgendes umfasst:
- das Warmformen der Oberflächenschicht (1), die ein thermoplastisches Polymer A umfasst,
- das Aufbringen des Fasermaterials (2) auf eine Seite der Oberflächenschicht (1) vor Schritt c) der Imprägnierung des Fasermaterials.

5. Verfahren zur Herstellung eines mehrschichtigen Verbundwerkstoffs nach den Ansprüchen 1 bis 3, **dadurch gekennzeichnet, dass** es außerdem Folgendes umfasst:
- das Laminieren der Oberflächenschicht (1) auf mindestens einer Fläche, wobei die andere Fläche mit einer Fläche des Fasermaterials in Kontakt steht, wobei dieser Laminierungsschritt nach dem Polymerisationsschritt d) durchgeführt wird.

6. Verfahren zur Herstellung eines mehrschichtigen Verbundwerkstoffs nach Anspruch 1, **dadurch gekennzeichnet, dass** das Ausschneiden in Schritt a) in einem einzigen Schritt nach Übereinanderlegen der Oberflächenschicht und des Fasermaterials oder für das Fasermaterial und für die Oberflächenschicht separat durchgeführt wird.

7. Verfahren zur Herstellung eines mehrschichtigen Verbundwerkstoffs nach einem der vorhergehenden Ansprüche, **dadurch gekennzeichnet, dass** das Ausschneiden in Schritt a) mit Hilfe eines Schneidwerkzeugs wie einer Schneidpresse, einem Stanzer oder einem Laser durchgeführt wird.

8. Verfahren zur Herstellung eines mehrschichtigen Verbundwerkstoffs nach einem der vorhergehenden Ansprüche, **dadurch gekennzeichnet, dass** die Imprägnierung des Fasermaterials in Schritt c) in einer geschlossenen Form durchgeführt wird.

9. Verfahren zur Herstellung eines mehrschichtigen Verbundwerkstoffs nach einem der vorhergehenden Ansprüche, **dadurch gekennzeichnet, dass** der Schritt c) und der Schritt d) in derselben geschlossenen Form durchgeführt werden.

10. Verfahren zur Herstellung eines mehrschichtigen Verbundwerkstoffs nach einem der vorhergehenden Ansprüche, **dadurch gekennzeichnet, dass** das Verfahren aus Resin Transfer Moulding oder Infusion ausgewählt wird.

11. Verfahren zur Herstellung eines mehrschichtigen Verbundwerkstoffs nach einem der vorhergehenden Ansprüche, **dadurch gekennzeichnet, dass** die dynamische Viskosität des flüssigen (Meth)acrylsirups im Bereich von 10 mPa*s bis 10.000 mPa*s, vorzugsweise von 50 mPa*s bis 5000 mPa*s und vorteilhafterweise von 100 mPa*s bis 1000 mPa*s liegt.

12. Verfahren zur Herstellung eines mehrschichtigen Verbundwerkstoffs nach einem der vorhergehenden Ansprüche, **dadurch gekennzeichnet, dass** der flüssige Acryl- oder Methacrylsirup ein Acryl-oder Methacryl-Monomer oder eine Mischung von Acryl- oder Methacryl-Monomeren, ein Acryl- oder Methacryl-Polymer und mindestens einen Initiator oder ein Initiatorsystem zum Starten der Polymerisation des Acryl- oder Methacryl-Monomers umfasst.

13. Verfahren zur Herstellung eines mehrschichtigen Verbundwerkstoffs nach einem der vorhergehenden Ansprüche, **dadurch gekennzeichnet, dass** die thermoplastische Methacrylmatrix aus Homo- oder Copolymeren von Methylmethacrylat oder einer Mischung davon ausgewählt wird.

14. Verfahren zur Herstellung eines mehrschichtigen Verbundwerkstoffs nach einem der vorhergehenden Ansprüche, **dadurch gekennzeichnet, dass** das Fasermaterial aus Pflanzenfasern, Holzfasern, Tierfasern, Mineralfasern, synthetischen Polymerfasern, Glasfasern, Kohlefasern und einer Mischung davon ausgewählt wird.

15. Mehrschichtiger Verbundwerkstoff zur Herstellung von mechanischen Teilen oder strukturierten Elementen oder Artikeln, **dadurch gekennzeichnet, dass** er Folgendes umfasst:
- a) eine oder mehrere Schichten aus thermoplastischem Polymer wobei es sich bei einer der Schichten um eine Oberflächenschicht (1), die ein thermoplastisches Polymer A umfasst, handelt,
- b) eine Substratschicht (2), umfassend einen Polymerverbundwerkstoff, umfassend eine thermoplastische Acryl- oder Methacrylpolymermatrix und ein Faserverstärkungsmaterial, wobei das Fasermaterial aus Fasern mit einem Formfaktor von mindestens 1000 oder auch einer zweidimensionalen makroskopischen Struktur besteht, und
- c) mindestens ein Fenster in den Schichten aus thermoplastischem Polymer und Substrat, wobei das Fenster aus einem transparenten thermoplastischen Material besteht, welches aus der thermoplastischen Acryl- oder Methacrylpolymermatrix oder einer Platte aus thermoplastischem Material besteht.

16. Mehrschichtiger Verbundwerkstoff nach Anspruch 15, **dadurch gekennzeichnet, dass** er eine zusätzliche Zwischenschicht (3) zwischen der Oberflächenschicht (1) und der Substratschicht (2) umfasst, wobei die Zwischenschicht ein thermoplastisches Polymer B umfasst.

17. Mehrschichtiger Verbundwerkstoff nach den Ansprüchen 15 und 16, **dadurch gekennzeichnet, dass** die in das Fenster bzw. die Fenster eingeschobene Platte transparent ist und einen Lichtdurchgang von mehr als 65%, vorzugsweise mehr als 75% und weiter bevorzugt mehr als 85% erlaubt.

18. Mechanische Teile oder Elemente von zwei- oder dreidimensionalen Strukturen oder Artikel aus mehrschichtigem Verbundwerkstoff nach den Ansprüchen 15, 16 oder 17, oder erhalten nach den Ansprüchen 1 bis 14 des Herstellungsverfahrens.

19. Teile oder Artikel aus mehrschichtigem Verbundwerkstoff nach Anspruch 18, wobei es sich bei den Teilen oder Artikeln um ein Automobilteil, ein Bootsteil, ein Zugteil, einen Sportartikel, ein Flugzeug- oder Hubschrauberteil, ein Raumschiff-oder Raketenteil, ein Photovoltaikmodulteil, ein Windturbinenteil, ein Möbelteil, ein Konstruktions- oder Gebäudeteil, ein Telefon- oder Mobiltelefonteil, ein Computer- oder Fernseherteil, ein Druckerteil oder ein Photokopiererteil oder ein dekoratives Objekt handelt.

## Claims

1. Process for manufacturing a multilayer composite material for producing mechanical parts or structured elements or articles, **characterized in that** it comprises the production of one or more windows in a thermoplastic material, the process comprising the following steps:
- a) cutting out at least one window in one or more layers made of thermoplastic polymer, one of the layers being a surface layer (1) comprising a thermoplastic polymer A, and at least one window in a reinforcing fibrous material consisting of long fibers, said windows being intended to coincide,
- b) optionally inserting a thermoplastic plate in said window(s),
- c) impregnating the fibrous material with a liquid acrylic or methacrylic syrup so that the syrup also fills said at least one window, in the absence of the thermoplastic plate,
- d) polymerizing the liquid acrylic or methacrylic syrup impregnating the fibrous material and present, in the absence of the thermoplastic plate, in the window(s).

2. Process for manufacturing a multilayer composite material according to Claim 1, **characterized in that** the plate inserted in the window(s) is transparent and allows light transmission of greater than 65%, preferably greater than 75% and more preferably greater than 85%.

3. Process for manufacturing a multilayer composite material according to Claim 1, **characterized in that** the multilayer composite material comprises an additional intermediate layer between the surface layer and the substrate layer, said intermediate layer comprising a thermoplastic polymer B comprising a window also filled with the thermoplastic material or the thermoplastic plate.

4. Process for manufacturing a multilayer composite material according to Claims 1 to 3, **characterized in that** it also comprises:
- thermoforming the surface layer (1) comprising a thermoplastic polymer A,
- laying the fibrous material (2) on one face of the surface layer (1) before step c) of impregnating said fibrous material.

5. Process for manufacturing a multilayer composite material according to Claims 1 to 3, **characterized in that** it also comprises:
- laminating the surface layer (1) on at least one face, the other face being in contact with one face of the fibrous material, this lamination step being performed after the polymerization step d).

6. Process for manufacturing a multilayer composite material according to Claim 1, **characterized in that** the cutting out in step a) is performed in a single step after superposition of the surface layer and of the fibrous material or separately for the fibrous material and for the surface layer.

7. Process for manufacturing a multilayer composite material according to any one of the preceding claims, **characterized in that** the cutting out in step a) is performed using a cutting tool such as a cutting press, a punch or a laser.

8. Process for manufacturing a multilayer composite material according to any one of the preceding claims, **characterized in that** the impregnation of the fibrous material in step c) is performed in a closed mold.

9. Process for manufacturing a multilayer composite material according to any one of the preceding claims, **characterized in that** step c) and step d) are performed in the same closed mold.

10. Process for manufacturing a multilayer composite material according to any one of the preceding claims, **characterized in that** the process is chosen from resin transfer molding and infusion.

11. Process for manufacturing a multilayer composite material according to any one of the preceding claims, **characterized in that** the dynamic viscosity of the liquid acrylic or methacrylic syrup is in a range from 10 mPa.s to 10 000 mPa.s, preferably from 50 mPa.s to 5000 mPa.s and advantageously from 100 mPa.s to 1000 mPa.s.

12. Process for manufacturing a multilayer composite material according to any one of the preceding claims, **characterized in that** the liquid acrylic or methacrylic syrup comprises an acrylic or methacrylic monomer or a mixture of acrylic or methacrylic monomers, an acrylic or methacrylic polymer and at least one initiator or an initiator system for starting the polymerization of the acrylic or methacrylic monomer.

13. Process for manufacturing a multilayer composite material according to any one of the preceding claims, **characterized in that** the thermoplastic methacrylic matrix is chosen from homopolymers or copolymers of methyl methacrylate, or a mixture thereof.

14. Process for manufacturing a multilayer composite material according to any one of the preceding claims, **characterized in that** the fibrous material is chosen from plant fibers, wood fibers, animal fibers, mineral fibers, synthetic polymeric fibers, glass fibers and carbon fibers, and a mixture thereof.

15. Multilayer composite material for producing mechanical parts or structured elements or articles, **characterized in that** it comprises:
- a) one or more layers made of thermoplastic polymer, one of which is a surface layer (1) comprising a thermoplastic polymer A,
- b) a substrate layer (2) comprising a polymeric composite material comprising an acrylic or methacrylic thermoplastic polymer matrix and a reinforcing fibrous material, said fibrous material consisting of fibers having an aspect ratio at least equal to 1000 or alternatively having a two-dimensional macroscopic structure, and
- c) at least one window in the thermoplastic polymer and substrate layers, said window being made of a transparent thermoplastic material consisting of the thermoplastic acrylic or methacrylic polymer matrix or a plate made of thermoplastic material.

16. Multilayer composite material according to Claim 15, **characterized in that** it comprises an additional intermediate layer (3) between the surface layer (1) and the substrate layer (2), said intermediate layer comprising a thermoplastic polymer B.

17. Multilayer composite material according to Claims 15 and 16, **characterized in that** the plate inserted in the window(s) is transparent and allows light transmission of greater than 65%, preferably greater than 75% and more preferably greater than 85%.

18. Two-dimensional or three-dimensional mechanical parts or structural elements or articles made of a multilayer composite material according to Claims 15, 16 and 17 or obtained according to Claims 1 to 14 of the manufacturing process.

19. Parts or articles made of a multilayer composite material according to Claim 18, said parts or articles being a motor vehicle part, boat part, train part, sport article, plane or helicopter part, space ship or rocket part, photovoltaic module part, wind turbine part, furniture part, construction or building part, telephone or cellphone part, computer or television part, printer or photocopier part, or a decorative object.
